# EUROPÄISCHE PATENTSCHRIFT

(11) **EP 3 532 757 B1**
(45) Veröffentlichungstag und Bekanntmachung des Hinweises auf die Patenterteilung: **23.11.2022**
(21) Anmeldenummer: 17777867.7
(22) Anmeldetag: 27.09.2017
(51) Int. Cl.: F16K 31/06, F02M 26/57, F02M 26/67

(54) **MAGNETVENTIL FÜR EINE VERBRENNUNGSKRAFTMASCHINE**
SOLENOID VALVE FOR AN INTERNAL COMBUSTION ENGINE
ÉLECTROVANNE POUR UN MOTEUR À COMBUSTION INTERNE

(30) Priorität: 27.10.2016 DE 102016120553
(43) Veröffentlichungstag der Anmeldung: 04.09.2019
(73) Patentinhaber: Pierburg GmbH, 41460 Neuss (DE)
(72) Erfinder: YILMAZ, Turgut, 50739 Köln (DE); ROMANOWSKI, Lukas, 40477 Düsseldorf (DE); LAPPAN, Rolf, 50733 Köln (DE); HENZE, Nikolaus, 41462 Neuss (DE); GRÜNHAGEN, Thomas, 42549 Velbert (DE); SCHWARZ, Markus, 41372 Niederkrüchten (DE)
(74) Vertreter: terpatent Patentanwälte ter Smitten Eberlein-Van Hoof Rütten Daubert
(86) Internationale Anmeldenummer: PCT/EP2017/074498
(87) Internationale Veröffentlichungsnummer: WO 2018/077562

(56) Entgegenhaltungen:
- DE-A1- 19 603 384
- DE-A1- 19 650 865
- DE-A1-102007 007 784
- FR-A- 1 220 887
- US-A- 6 062 536
- US-A1- 2013 228 157

## Beschreibung

Die vorliegende Erfindung betrifft ein Magnetventil für eine Verbrennungskraftmaschine mit einem Gehäuse, einer Spule, einem Anker, welcher durch Bestromung der Spule axial bewegbar ist, und einer Gleitbuchse, welche in einer Bohrung des Gehäuses aufgenommen ist. Das Magnetventil umfasst zusätzlich einen einen Ventilkörper ausbildenden Stößel, welcher mit dem Anker bewegbar ist, und eine Druckfeder, welche eine Kraft auf den Stößel entgegen einer auf den Stößel wirkenden elektromagnetischen Kraft aufbringt.

Solche Magnetventile werden häufig dazu eingesetzt, durch Öffnen oder Schließen des Ventils die Kolbenböden einer Verbrennungskraftmaschine mit Kühlmedium zu versorgen.

Die JP 2013-29147 A offenbart ein Magnetventil mit einem Gehäuse, in welchem eine Spule angeordnet ist, die auf einen Spulenträger gewickelt ist. Der Spulenträger weist eine Hülsenöffnung auf, in welcher eine Gleitbuchse angeordnet ist. Innerhalb der Gleitbuchse ist ein Magnetanker durch Bestromung der Spule axial bewegbar. Der Magnetanker ist über eine Verbindungsstange mit einem Stößel verbunden, welcher durch axiales Bewegen einen Ventildurchlass öffnet oder schließt. Der Stößel ist von einer Druckfeder umgeben, welche entgegen der Kraft des Magnetankers eine Druckkraft auf den Stößel aufbringt, so dass in einem nicht bestromten Zustand des Magnetankers, dieser und der Stößel in eine Ruheposition bewegt werden, jedoch benötigt dieses Magnetventil einen relativ großen Bauraum und ist schwierig zu montieren, insbesondere da eine Vielzahl an Dichtungen benötigt wird. Der Stößel ist im Gehäuse geführt, so dass erhöhte Reibungskräfte zu erwarten sind.

Die US 6,062,536 offenbart ein Magnetventil mit einer mittels des Ankers bewegbaren Ventilstange, an deren Ende ein Ventilkörper ausgebildet ist. Die Ventilstange wird in einer Lagerbuchse geführt und über eine Feder in Schließrichtung des Ventilkörpers belastet.

Die FR 1 220 887 offenbart ein Magnetventil, dessen Ventilstange ebenfalls in einer Buchse geführt ist. Am Ende der Ventilstange ist ein Körper angebracht, der mittels einer Feder, die axial gegen eine Erweiterung der Gleitbuchse anliegt, die Ventilstange in einer Schließrichtung belastet, wobei der Verschluss durch ein weiteres hydraulisch bewegbares Element erfolgt.

Des Weiteren ist aus der DE 196 03 384 A1 ein elektromagnetisches Ventil bekannt, bei dem eine Ventilstange mit ihrem einen Ende am Anker befestigt ist und deren entgegengesetztes Ende als Ventilkörper dient. Diese Ventilstange ist von einer Feder umgeben. Der Anker wird in einer Gleitbuchse geführt, in deren Innern die Feder angeordnet ist.

Zusätzlich offenbart die US 2013/0228157 A1 ein Abgasrückführventil mit einer Lagerbuchse, welche die Ventilstange führt. Oberhalb der Lagerbuchse ist eine Feder angeordnet, die die Ventilstange in Schließrichtung belastet.

Aus der DE 10 2007 007 784 A1 ist ein Elektromagnetventil mit einer Federauflage bekannt, die zur Einstellung der Federkraft in unterschiedlichen Höhen im Gehäuse befestigt werden kann. Die Feder und die Federauflage umgeben den Stößel des Ventils.

Zusätzlich ist aus der DE 196 50 865 A1 ein Elektromagnetventil bekannt, bei dem ein Gleitstück, in dem der Stößel geführt wird, zusätzlich als Federauflage dient. Dieses Gleitstück wird mit seiner Federauflagefläche axial im Gehäuse eingeklemmt.

Die Aufgabe der vorliegenden Erfindung liegt somit darin, ein Magnetventil für eine Verbrennungskraftmaschine zu schaffen, welches einen geringeren Bauraum benötigt, einfach zu montieren ist und bei hoher Dichtigkeit eine geringe Reibung aufweist.

Diese Aufgabe wird durch ein Magnetventil für eine Verbrennungskraftmaschine mit den Merkmalen des Anspruchs 1 gelöst.

Bei dem erfindungsgemäßen Magnetventil umgibt die Druckfeder die Gleitbuchse und ist durch die Gleitbuchse geführt. Durch die Druckfeder wird sichergestellt, dass der Stößel auch entgegen der Kraft des Elektromagneten zwischen zwei axialen Endpositionen bewegbar ist, so dass das Ventil zu öffnen und zu schließen ist. Die Druckfeder ist durch die erfindungsgemäße Anordnung zu der Gleitbuchse in einem gleichen axialen Bereich des Magnetventils angeordnet wie die Gleitbuchse. Dadurch sind die Druckfeder und die Gleitbuchse verschachtelt angeordnet, so dass die axiale Länge des Magnetventils reduziert ist und der benötigte Bauraum des Magnetventils geringer ist. Zusätzlich ist es durch die erfindungsgemäße Anordnung der Druckfeder möglich, dass die Druckfeder durch die Gleitbuchse geführt ist. Dadurch kann auf zusätzliche Bauteile zur Führung der Druckfeder verzichtet werden. Solche Bauteile benötigen zusätzlich Platz im Magnetventil, so dass das erfindungsgemäße Magnetventil kleiner ausgeführt werden kann und der somit benötigte Bauraum geringer ist. Zusätzlich können solche Bauteile eingespart werden, so dass das Magnetventil wirtschaftlicher herstellbar ist. Das Gehäuse ist erfindungsgemäß zweiteilig ausgebildet, wobei im ersten Gehäuseteil die Gleitbuchse angeordnet ist und in einem zweiten Gehäuseteil der Spulenträger und der Anker angeordnet sind, und dass das erste Gehäuseteil mit dem zweiten Gehäuseteil mechanisch verbunden ist. Der Elektromagnet ist dadurch für unterschiedliche Anschlüsse nutzbar. Darüber hinaus ist bei einem Schadensfall jedes Teil einzeln austauschbar, so dass nicht das ganze Magnetventil ausgetauscht werden muss. Des Weiteren liegt die Druckfeder gegen einen Absatz des ersten Gehäuseteils und gegen den Stößel an. Dadurch kann der Stößel relativ zum ersten Gehäuseteil bewegt werden. Der Absatz wird dabei durch das erste Gehäuseteil ausgebildet, so dass keine weiteren Teile notwendig sind. Dadurch kann das Magnetventil wirtschaftlicher hergestellt werden.

In einer bevorzugten Ausführung der Erfindung weist das Gehäuse erfindungsgemäß ein Ventilgehäuse auf, in dem die Gleitbuchse angeordnet ist, wobei der Stößel, der den Ventilkörper ausbildet, in der Gleitbuchse geführt bewegbar ist. Durch die Gleitbuchse werden die Gleiteigenschaften des Stößels im Gehäuse verbessert. Zudem kann im Falle des Verschleißes der Gleitbuchse diese unabhängig vom Gehäuse getauscht werden. Durch die verbesserten Gleiteigenschaften des Stößels sind die Reibungskräfte geringer, so dass dadurch geringere Stellkräfte benötigt werden, wodurch ein kleinerer Elektromotor verwendet werden kann. Dadurch kann das Magnetventil kleiner gebaut werden, so dass der benötigte Bauraum für das Magnetventil geringer ist.

Vorzugsweise ist in dem zweiten Gehäuseteil eine Dichthülse angeordnet, welche sich bis in das erste Gehäuseteil erstreckt, wobei die Dichthülse die Druckfeder radial umgibt. Die Dichthülse ist vorzugsweise zylindrisch ausgebildet und dichtet die Spule und den Spulenträger zum Anker fluidisch ab. Über die Dichthülse, welche sich in das erste Gehäuseteil erstreckt, kann eine Verbindungsstelle zwischen dem ersten Gehäuseteil und dem zweiten Gehäuseteil abgedichtet werden. Dadurch sind keine zusätzlichen Maßnahmen zur Abdichtung dieser Verbindungsstelle notwendig. Durch die Anordnung der Dichthülse, die die Druckfeder radial umgibt, werden beide Bauteile miteinander verschachtelt. Dadurch wird das Magnetventil kleiner, so dass der benötigte Bauraum reduziert wird.

In einer bevorzugten Ausgestaltung ist radial zwischen dem ersten Gehäuseteil und der Dichthülse ein Dichtring eingespannt. Der Dichtring liegt somit unter Spannung an dem ersten Gehäuseteil und der Dichthülse an. Dadurch wird ein Innenraum des Magnetventils nach außen hin abgedichtet. Zusätzlich wird eine Verbindungsstelle zwischen dem ersten Gehäuseteil und dem zweiten Gehäuseteil abgedichtet.

In einer bevorzugten Ausführung der Erfindung ist das erste Gehäuseteil über eine Presspassung mit dem zweiten Gehäuseteil verbunden, wobei beide Gehäuseteile über eine Laserschweißverbindung dauerhaft fixiert sind. Mittels einer Presspassung kann auf einfache und wirtschaftliche Weise eine kraftschlüssige Verbindung zwischen ersten Gehäuseteil und zweiten Gehäuseteil hergestellt werden. Mittels einer Laserschweißverbindung kann diese Verbindung auf ebenso einfache und wirtschaftliche Weise fixiert werden. Dadurch können die Produktionskosten gesenkt werden.

Vorzugsweise weist das erste Gehäuseteil einen Ventilsitz auf. Der Ventilsitz ist somit durch das erste Gehäuseteil ausgebildet. Dadurch sind keine weiteren Teile notwendig, um einen Ventilsitz auszuformen. Das Magnetventil ist dadurch wirtschaftlicher herstellbar.

Der Dichtring ist vorzugsweise axial gegenüberliegend zu einem Vorsprung des zweiten Gehäuseteils angeordnet. Der Vorsprung ist dabei vorzugsweise ringförmig ausgebildet und erstreckt sich in einer axialen Richtung des zweiten Gehäuseteils. Eine axiale Fläche des Vorsprungs kann dabei an dem Dichtring anliegen und bildet eine weitere Dichtfläche, wodurch die Dichtwirkung verbessert wird, oder der Vorsprung dient lediglich dazu, den Dichtring gegen Herausfallen insbesondere bei der Montage zu sichern.

Vorteilhafterweise ist der Vorsprung des zweiten Gehäuseteils von dem ersten Gehäuseteil umgeben. Das erste Gehäuseteil ist dabei in Kontakt mit dem Vorsprung des zweiten Gehäuseteils. Dadurch wird das erste Gehäuseteil nach der Montage koaxial zu dem zweiten Gehäuseteil ausgerichtet. Zusätzlich kann ein Bereich gebildet werden, in dem beide Gehäuseteile miteinander fixiert werden können.

In einer vorteilhaften Ausgestaltung liegt die Dichthülse an dem Vorsprung des zweiten Gehäuseteils und an dem Dichtring an. Die Dichthülse dichtet dadurch die Spule und den Spulenträger gegenüber einem Gehäuseinnenraum, welcher Fluid aufweist, ab.

In einer weiteren vorteilhaften Ausgestaltung liegt die Dichthülse an dem Spulenträger an. Die Dichthülse wird dadurch durch den Spulenträger zentrisch in der Bohrung gehalten.

Vorzugsweise führt die Dichthülse den Anker. Die Gleitbewegung des Ankers wird somit durch die Dichthülse geführt. Dadurch wird kein zusätzliches Bauteil benötigt, welches den Anker führt, so dass das Magnetventil wirtschaftlicher und kleiner herstellbar ist.

In einer bevorzugten Weiterbildung ist ein zum Ventilsitz entgegengesetztes Ende der Dichthülse geschlossen ausgebildet und weist einen federnden Endanschlag für den Anker auf. Das zum Ventilsitz entgegengesetzte Ende der Dichthülse ist das Ende, an welchem der Anker angeordnet ist, so dass eine Bewegung des Ankers in einer axialen Richtung durch den federnden Endanschlag begrenzt und am Endanschlag abgefedert ist. Ein federnder Endanschlag kann somit ohne Verwendung zusätzlicher Bauteile ausgebildet werden.

Besonders vorteilhaft ist es, wenn die Dichthülse stufenförmig ausgebildet ist. Als stufenförmig im Sinne der vorliegenden Erfindung wird verstanden, dass sich der Durchmesser der Dichthülse sprungartig ändert. Dadurch ist es möglich, dass die Dichthülse der Kontur der entsprechend ausgeformten Bohrung folgen kann, so dass die Dichthülse durch die Bohrung gehalten ist.

Es wird somit ein Magnetventil für eine Verbrennungskraftmaschine geschaffen, welches kleinere Abmaße aufweist und dadurch weniger Bauraum benötigt.

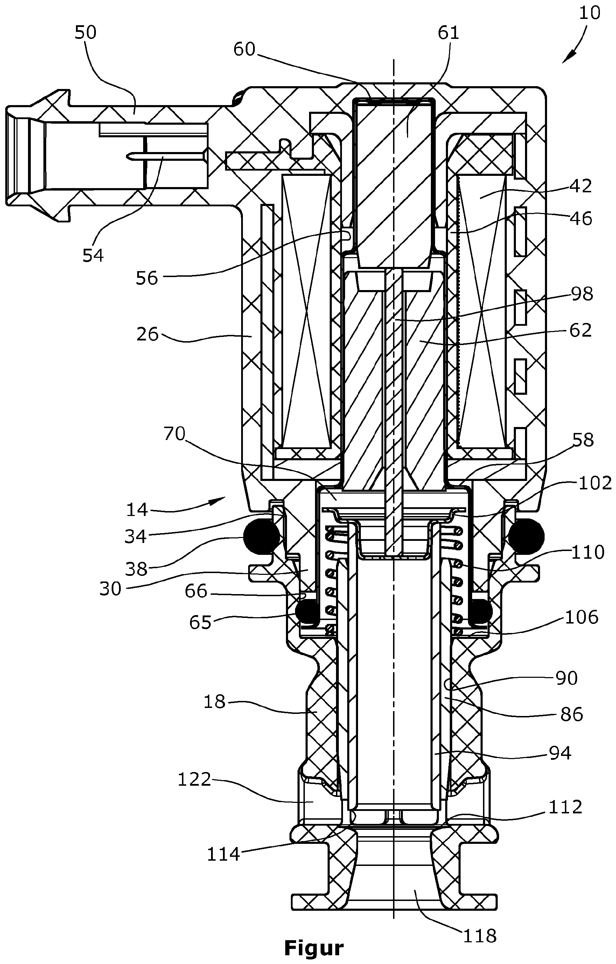

Weitere Einzelheiten und Vorteile der vorliegenden Erfindung ergeben sich aus der nachfolgenden Beschreibung des Ausführungsbeispiels in Verbindung mit der Zeichnung. In dieser zeigt die

Figur eine Schnittdarstellung eines erfindungsgemäßen Magnetventils für eine Verbrennungskraftmaschine.

Das Magnetventil 10 umfasst ein Gehäuse 14, welches zweiteilig aus einem ersten Gehäuseteil 18, welches als Ventilgehäuse dient, und einem zweiten Gehäuseteil 26 gebildet ist. Das zweite Gehäuseteil 26 bildet einen axialen Vorsprung 30 aus, welcher von dem ersten Gehäuseteil 18 umgeben ist, und über welchen beide Gehäuseteile 18, 26 durch eine Presspassung miteinander verbunden sind. An einer Verbindungsstelle 34 beider Gehäuseteile 18, 26 am Vorsprung 30 sind diese über eine Laserschweißverbindung dauerhaft miteinander fixiert. In dem Bereich der Verbindungsstelle 30 ist ein O-Ring 38 angeordnet, welcher das Magnetventil 10 nach außen hin abdichtet.

Innerhalb des zweiten Gehäuseteils 26 ist eine Spule 42 angeordnet, welche aus einem Spulendraht gebildet ist, der auf einen Spulenträger 46 gewickelt ist. Das zweite Gehäuseteil 26 bildet einen Stecker 50 mit Steckkontakten 54 aus, über welchen die Spule 42 bestrombar ist. Die Spule 42 weist eine Spulenträgerbohrung 56 auf, in welcher eine mehrstufige Dichthülse 58 angeordnet ist. Die Dichthülse 58 liegt an dem Spulenträger 46 und dem Vorsprung 30 an und erstreckt sich stufenförmig erweiternd bis in das erste Gehäuseteil 18. Ein zum ersten Gehäuseteil 18 entgegengesetztes Ende der Dichthülse 58 ist geschlossen ausgebildet und weist einen federnden Endanschlag 60 für einen in der Dichthülse 58 geführt angeordneten Anker 61 auf. Der Anker 61 ist durch Bestromung der Spule 42 axial zu einem in der Dichthülse 58 angeordneten Kern 62 bewegbar.

In dem ersten Gehäuseteil 18 ist ein Dichtring 65 axial gegenüberliegend zu dem Vorsprung 30, radial zwischen einer Gehäuseaußenwand 66 des ersten Gehäuseteils 18 und der Dichthülse 58 angeordnet, so dass ein Gehäuseinnenraum 70 nach außen abgedichtet ist. Eine metallische Gleitbuchse 86 ist in einer Bohrung 90 des ersten Gehäuseteils 18 angeordnet. Die Gleitbuchse 86 nimmt einen einen Ventilkörper ausbildenden Stößel 94 auf. Dieser ist über eine mit dem Anker 61 verbundene Stange 98 axial bewegbar, die den Kern 62 durchdringt und mit ihrem zum Anker 61 entgegengesetzten Ende gegen den Stößel 94 anliegt. Der Stößel 94 bildet einen radial erweiternden Rand 102 aus. Zwischen dem radial erweiternden Rand 102 des Stößels 94 und einem Absatz 106 im ersten Gehäuseteil 18 ist eine Druckfeder 110 vorgespannt angeordnet, welche eine Kraft auf den Stößel 94 entgegen einer auf den Stößel 94 wirkenden elektromagnetischen Kraft aufbringt, so dass der Stößel 94 ständig gegen die Stange 98 gedrückt wird. Die Druckfeder 110 umgibt die Gleitbuchse 86 und ist durch die Gleitbuchse 86 geführt, wobei die Druckfeder 110 von der Dichthülse 58 radial umgeben ist. Dadurch wird eine Verschachtelung der Bauteile erzielt, so dass der Bauraum reduziert wird.

Ein zu dem radial erweiternden Rand 102 entgegengesetztes axiales Ende des Stößels 94 wirkt mit einem abgerundeten Ventilsitz 112 zusammen, wobei der Stößel 94 mit einer dünnen Kante 114 auf dem Ventilsitz 112 aufliegt, so dass beim Öffnen eine durch die Strömung auf den Stößel 94 wirkende Schließkraft geringer ist. Im nicht bestromten Zustand ist eine Verbindung zwischen einem in axialer Richtung am Ende des ersten Gehäuseteils 18 angeordneten Ventileingang 118 und einem in radialer Richtung am Ende des ersten Gehäuseteils 18 angeordneten Ventilausgang 122 freigegeben. Im bestromten Zustand ist der Stößel 94 mit dem Ventilsitz 112 in Kontakt und verschließt die Verbindung zwischen Ventileingang 118 und Ventilausgang 122.

Bei dem beschriebenen erfindungsgemäßen Magnetventil wird durch eine Verschachtelung der Bauteile eine Reduzierung des benötigten Bauraums erzielt.

Es sollte deutlich sein, dass der Schutzbereich nicht auf die beschriebenen Ausführungsbeispiele eines Magnetventils beschränkt ist, sondern verschiedene Modifikationen und konstruktive Änderungen denkbar sind, die im Umfang der beigefügten Ansprüche liegen.

### Bezugszeichenliste

- 10: Magnetventil
- 14: Gehäuse
- 18: erstes Gehäuseteil
- 26: zweites Gehäuseteil
- 30: Vorsprung
- 34: Verbindungsstelle
- 38: O-Ring
- 42: Spule
- 46: Spulenträger
- 50: Stecker
- 54: Steckkontakte
- 56: Spulenträgerbohrung
- 58: Dichthülse
- 60: federnder Endanschlag
- 61: Anker
- 62: Kern
- 65: Dichtring
- 66: Gehäuseaußenwand
- 70: Gehäuseinnenraum
- 86: Gleitbuchse
- 90: Bohrung
- 94: Stößel
- 98: Stange
- 102: radial erweiternden Rand
- 106: Absatz
- 110: Druckfeder
- 112: Ventilsitz
- 114: dünne Kante
- 118: Ventileingang
- 122: Ventilausgang

## Patentansprüche

1. Magnetventil (10) für eine Verbrennungskraftmaschine mit:
- einem Gehäuse (14),
- einer Spule (42),
- einem Anker (61), welcher durch Bestromung der Spule (42) axial bewegbar ist,
- einer Gleitbuchse (86), welche in einer Bohrung (90) des Gehäuses (14) aufgenommen ist,
- einem einen Ventilkörper ausbildenden Stößel (94), welcher mit dem Anker (61) bewegbar ist,
- einer Druckfeder (110), welche eine Kraft auf den Stößel (94) entgegen einer auf den Stößel (94) wirkenden elektromagnetischen Kraft aufbringt,
**dadurch gekennzeichnet, dass**
die Druckfeder (110) die Gleitbuchse (86) umgibt und durch die Gleitbuchse (86) geführt ist und das Gehäuse (14) zweiteilig ausgebildet ist, wobei im ersten Gehäuseteil (18) die Gleitbuchse (86) angeordnet ist und in einem zweiten Gehäuseteil (26) ein Spulenträger (46) und der Anker (61) angeordnet sind, und dass das erste Gehäuseteil (18) mit dem zweiten Gehäuseteil (26) mechanisch verbunden ist, wobei die Druckfeder (110) gegen einen Absatz (106) des ersten Gehäuseteils (18) und gegen den Stößel (94) anliegt.

2. Magnetventil (10) für eine Verbrennungskraftmaschine nach Anspruch 1, **dadurch gekennzeichnet, dass** das Gehäuse (14) ein Ventilgehäuse aufweist, in dem die Gleitbuchse (86) angeordnet ist, wobei der Stößel (94), der den Ventilkörper ausbildet, in der Gleitbuchse (86) geführt bewegbar ist.

3. Magnetventil (10) für eine Verbrennungskraftmaschine nach Anspruch 1 oder 2, **dadurch gekennzeichnet, dass** in dem zweiten Gehäuseteil (26) eine Dichthülse (58) angeordnet ist, welche sich bis in das erste Gehäuseteil (18) erstreckt, wobei die Dichthülse (58) die Druckfeder (110) radial umgibt.

4. Magnetventil (10) für eine Verbrennungskraftmaschine nach Anspruch 3, **dadurch gekennzeichnet, dass** radial zwischen dem ersten Gehäuseteil (18) und der Dichthülse (58) ein Dichtring (65) eingespannt ist.

5. Magnetventil (10) für eine Verbrennungskraftmaschine nach einem der vorhergehenden Ansprüche, **dadurch gekennzeichnet, dass** das erste Gehäuseteil (18) über eine Presspassung mit dem zweiten Gehäuseteil (26) verbunden ist, wobei beide Gehäuseteile (18, 26) über eine Laserschweißverbindung dauerhaft fixiert sind.

6. Magnetventil (10) für eine Verbrennungskraftmaschine nach einem der vorhergehenden Ansprüche, **dadurch gekennzeichnet, dass** das erste Gehäuseteil (18) einen Ventilsitz (112) aufweist.

7. Magnetventil (10) für eine Verbrennungskraftmaschine nach einem der vorhergehenden Ansprüche, **dadurch gekennzeichnet, dass** der Dichtring (65) axial gegenüberliegend zu einem Vorsprung (30) des zweiten Gehäuseteils (26) angeordnet ist.

8. Magnetventil (10) für eine Verbrennungskraftmaschine nach Anspruch 7, **dadurch gekennzeichnet, dass** der Vorsprung (30) des zweiten Gehäuseteils (26) von dem ersten Gehäuseteil (18) umgeben ist.

9. Magnetventil (10) für eine Verbrennungskraftmaschine nach einem der Ansprüche 7 oder 8, **dadurch gekennzeichnet, dass** die Dichthülse (58) an dem Vorsprung (30) des zweiten Gehäuseteils (26) und an dem Dichtring (65) anliegt.

10. Magnetventil (10) für eine Verbrennungskraftmaschine nach einem der Ansprüche 3 bis 9, **dadurch gekennzeichnet, dass** die Dichthülse (58) an dem Spulenträger (46) anliegt.

11. Magnetventil (10) für eine Verbrennungskraftmaschine nach einem der Ansprüche 3 bis 10, **dadurch gekennzeichnet, dass** die Dichthülse (58) den Anker (61) führt.

12. Magnetventil (10) für eine Verbrennungskraftmaschine nach einem der Ansprüche 3 bis 11, **dadurch gekennzeichnet, dass** ein zum Ventilsitz (112) entgegengesetztes Ende der Dichthülse (58) geschlossen ausgebildet ist und einen federnden Endanschlag (60) für den Anker (61) aufweist.

13. Magnetventil (10) für eine Verbrennungskraftmaschine nach einem der Ansprüche 3 bis 12, **dadurch gekennzeichnet, dass** die Dichthülse (58) stufenförmig ausgebildet ist.

## Claims

1. Solenoid valve (10) for an internal combustion engine with:
- a housing (14),
- a coil (42),
- an armature (61) which can be moved axially by energizing the coil (42),
- a sliding bush (86) which is received in a bore (90) of the housing (14)
- a tappet (94) configuring a valve body, which is movable with the armature (61)
- a compression spring (110) which applies a force to the tappet (94) in opposition to an electromagnetic force acting on the tappet (94) **characterized in that**
the compression spring (110) surrounds the slide bushing (86) and is guided through the slide bushing (86), and the housing (14) is configured in two parts, the slide bushing (86) being arranged in a first housing part (18) and a coil carrier (46) and the armature (61) being arranged in a second housing part (26) and **in that** the first housing part (18) is mechanically connected to the second housing part (26), wherein the compression spring (110) bears against a shoulder (106) of the first housing part (18) and against the tappet (94).

2. Solenoid valve (10) for an internal combustion engine according to claim 1,
**characterized in that**
the housing (14) comprises a valve housing in which the sliding bushing (86) is arranged, wherein the tappet (94), which configures the valve body, is guidedly movable in the sliding bushing (86).

3. Solenoid valve (10) for an internal combustion engine according to claim 1 or 2,
**characterized in that**
a sealing sleeve (58) is arranged in the second housing part (26), which sealing sleeve (58) extends into the first housing part (18), the sealing sleeve (58) radially surrounding the compression spring (110).

4. Solenoid valve (10) for an internal combustion engine according to claim 3,
**characterized in that**
a sealing ring (65) is clamped radially between the first housing part (18) and the sealing sleeve (58).

5. Solenoid valve (10) for an internal combustion engine according to one of the preceding claims,
**characterized in that**
the first housing part (18) is connected to the second housing part (26) via a press fitting, both housing parts (18, 26) being permanently fixed via a laser welded connection.

6. Solenoid valve (10) for an internal combustion engine according to one of the preceding claims,
**characterized in that**
the first housing part (18) comprises a valve seat (112).

7. Solenoid valve (10) for an internal combustion engine according to one of the preceding claims,
**characterized in that**
the sealing ring (65) is arranged axially opposite a projection (30) of the second housing part (26).

8. Solenoid valve (10) for an internal combustion engine according to claim 7,
**characterized in that**
the projection (30) of the second housing part (26) is surrounded by the first housing part (18).

9. Solenoid valve (10) for an internal combustion engine according to one of claims 7 or 8,
**characterized in that**
the sealing sleeve (58) bears against the projection (30) of the second housing part (26) and against the sealing ring (65).

10. Solenoid valve (10) for an internal combustion engine according to any one of claims 3 to 9,
**characterized in that**
the sealing sleeve (58) bears against the coil carrier (46).

11. Solenoid valve (10) for an internal combustion engine according to one of claims 3 to 10,
**characterized in that**
the sealing sleeve (58) guides the armature (61).

12. Solenoid valve (10) for an internal combustion engine according to one of claims 3 to 11,
**characterized in that**
an end of the sealing sleeve (58) opposite the valve seat (112) is configured closed and comprises a resilient end stop (60) for the armature (61).

13. Solenoid valve (10) for an internal combustion engine according to one of claims 3 to 12,
**characterized in that**
the sealing sleeve (58) is configured in a stepped manner.

## Revendications

1. Vanne magnétique (10) pour un moteur à combustion interne, avec
- un boîtier (14),
- une bobine (42),
- une armature (61) qui peut être déplacée axialement en alimentant la bobine (42),
- une douille de glissement (86) logée dans un alésage (90) du boîtier (14),
- un poussoir (94) formant un corps de soupape, qui est mobile avec l'armature (61),
- un ressort de compression (110) qui exerce une force sur le poussoir (94) à l'encontre d'une force électromagnétique agissant sur le poussoir (94),
**caractérisé en ce que**
le ressort de pression (110) entoure la douille de glissement (86) et est guidé par la douille de glissement (86) et le boîtier (14) est formé en deux parties, la douille de glissement (86) étant disposée dans la première partie du boîtier (18) et un support de bobine (46) et l'armature (61) étant disposés dans une deuxième partie du boîtier (26), et que la première partie du boîtier (18) est reliée mécaniquement à la deuxième partie du boîtier (26), le ressort de pression (110) s'appuyant contre un épaulement (106) de la première partie du boîtier (18) et contre le poussoir (94).

2. Vanne magnétique (10) pour un moteur à combustion interne selon la revendication 1, **caractérisée en ce que** le boîtier (14) comprend un boîtier de vanne dans lequel est disposé le coussinet de glissement (86), le poussoir (94), qui forme le corps de vanne, étant mobile et guidé dans le coussinet de glissement (86).

3. Vanne magnétique (10) pour un moteur à combustion interne selon la revendication 1 ou 2, **caractérisée en ce qu'**une douille d'étanchéité (58) est disposée dans la deuxième partie du boîtier (26), laquelle s'étend jusque dans la première partie du boîtier (18), la douille d'étanchéité (58) entourant radialement le ressort de pression (110).

4. Vanne magnétique (10) pour un moteur à combustion interne selon la revendication 3, **caractérisée en ce qu'**une bague d'étanchéité (65) est serrée radialement entre la première partie du boîtier (18) et la douille d'étanchéité (58).

5. Vanne magnétique (10) pour un moteur à combustion interne selon l'une des revendications précédentes, **caractérisée en ce que** la première partie du boîtier (18) est reliée à la deuxième partie du boîtier (26) par un ajustement serré, les deux parties du boîtier (18, 26) étant fixées de manière permanente par une soudure au laser.

6. Vanne magnétique (10) pour un moteur à combustion interne selon l'une des revendications précédentes, **caractérisée en ce que** la première partie de boîtier (18) comprend un siège de vanne (112).

7. Vanne magnétique (10) pour un moteur à combustion interne selon l'une des revendications précédentes, **caractérisée en ce que** la bague d'étanchéité (65) est placée axialement à l'opposé d'une saillie (30) de la deuxième partie de boîtier (26).

8. Vanne magnétique (10) pour un moteur à combustion interne selon la revendication 7, **caractérisée en ce que** la saillie (30) de la deuxième partie de boîtier (26) est entourée par la première partie de boîtier (18).

9. Vanne magnétique (10) pour un moteur à combustion interne selon l'une des revendications 7 ou 8, **caractérisée en ce que** la douille d'étanchéité (58) est en contact avec la saillie (30) de la deuxième partie du boîtier (26) et avec la bague d'étanchéité (65).

10. Vanne magnétique (10) pour un moteur à combustion interne selon l'une des revendications 3 à 9, **caractérisée en ce que** le manchon d'étanchéité (58) est en contact avec le support de bobine (46).

11. Vanne magnétique (10) pour un moteur à combustion interne selon l'une des revendications 3 à 10, **caractérisée en ce que** la douille d'étanchéité (58) guide l'armature (61).

12. Vanne magnétique (10) pour un moteur à combustion interne selon l'une des revendications 3 à 11, **caractérisée en ce qu'**une extrémité de la douille d'étanchéité (58) opposée au siège de vanne (112) est fermée et présente une butée d'extrémité élastique (60) pour l'induit (61).

13. Vanne magnétique (10) pour un moteur à combustion interne selon l'une des revendications 3 à 12, **caractérisée en ce que** la douille d'étanchéité (58) a une forme étagée.
